# EUROPÄISCHE PATENTSCHRIFT

(11) **EP 3 204 251 B1**
(45) Veröffentlichungstag und Bekanntmachung des Hinweises auf die Patenterteilung: **06.06.2018**
(21) Anmeldenummer: 15756577.1
(22) Anmeldetag: 13.08.2015
(51) Int. Cl.: B60K 26/00, B60K 26/02, B60W 50/00, G05G 1/445, G05G 5/03

(54) **FAHRPEDAL MIT HAPTISCHER SIGNALGEBUNG**
ACCELERATOR PEDAL WITH HAPTIC SIGNALLING
PÉDALE D'ACCÉLÉRATEUR À SIGNALISATION HAPTIQUE

(30) Priorität: 09.10.2014 DE 102014220466
(43) Veröffentlichungstag der Anmeldung: 16.08.2017
(73) Patentinhaber: Robert Bosch GmbH, 70442 Stuttgart (DE)
(72) Erfinder: HARTIG, Oliver, 71032 Boeblingen (DE); THALER, Alfred, 71229 Leonberg (DE); DEISSLER, Markus, 74172 Neckarsulm (DE); HLAVKA, Milos, 37312 Borovany (CZ)
(86) Internationale Anmeldenummer: PCT/EP2015/068632
(87) Internationale Veröffentlichungsnummer: WO 2016/055198

(56) Entgegenhaltungen:
- WO-A1-2013/024133
- CN-U- 202 015 855
- DE-A1- 10 343 136

## Beschreibung

### Gebiet der Erfindung

Die Erfindung betrifft ein Fahrpedal mit haptischer Signalgebung, insbesondere für ein Kraftfahrzeug, mit den Merkmalen des Oberbegriffs des unabhängigen Anspruchs 1, Die Erfindung betrifft weiterhin ein Kraftfahrzeug mit einem Fahrpedal mit haptischer Signalgebung.

### Stand der Technik

Fahrpedale, die dem Fahrer eine haptische Rückmeldung geben, sind bereits bekannt und werden auch als aktive Fahrpedale bezeichnet Die haptischen Rückmeldungen können hierbei verschiedene Formen annehmen, wie zum Beispiel Anklopfen oder Vibration. Um derartige haptische Rückmeldungen zu erzeugen gibt es verschiedene Möglichkeiten. Häufig wird dabei der ganze Pedalarm des Fahrpedals in Bewegung versetzt oder die Bewegung wird direkt an der Trittplatte des Fahrpedals erzeugt.

Ein derartiges Fahrpedal ist aus der DE 296 12 273 U1 bekannt Aus der gattungsbildenden WO 20 13/024133 A1 ist eine Fahrpedaleinheit für Kraftfahrzeuge bekannt. Aus der DE 103 43 136 A1 ist ein verstellbares Fußhebelwerk bekannt.

### Offenbarung der Erfindung

Die Erfindung geht aus von der Erkenntnis, dass die Erzeugung einer haptischen Rückmeldung direkt an der Pedalplatte häufig ein Bauraumproblem darstellt. Hierbei müssen beispielsweise ein als Vibrationselement ausgebildetes Signalelement, aber auch ein als Antriebseinheit zur Signalerzeugung dienender Aktuator in einem relativ kleinen Bereich untergebracht werden. Dies kann zu dem Problem führen, dass die komplette, aus dem Signalelement und dem Aktuator bestehende Signalgeberanordnung in den Pedalarm bzw. in die Trittplatte des Fahrpedals eingebracht werden muss. Dadurch kann das Fahrpedal bzw. der Pedalarm bzw die Trittplatte beispielsweise sehr aufwändig in der Herstellung werden bzw sehr groß bauen bzw. ein zu hohes Gewicht annehmen. Ein anderes Problem kann darin bestehen, dass, um Bauraum zu sparen, ein derart kleiner Aktuator bzw. ein derart kleines Signalelement gewählt werden muss, dass die Intensität des haptischen Signals nicht oder nur knapp den Anforderungen derartiger aktiver

Fahrpedale entspricht. Darüber hinaus erfordern herkömmliche Fahrpedale mit haptischer Signalgebung für jede Pedalform-Modifikation (beispielsweise für unterschiedliche Kfz-Hersteller oder unterschiedliche Modelle eines Kfz-Herstellers) eine eigene, speziell angepasste Signalgeberanordnung. Dies kann mit hohen Herstellungskosten verbunden sein. Weiterhin hat sich gezeigt, dass Endkunden großen Wert auf eine besonders geringe Geräuschentwicklung beim Betrieb eines derartigen Fahrpedals legen. Bei herkömmlichen Fahrpedalen müssen dafür besondere Geräuschdämpfungsmaßnahmen ergriffen werden, um die bei der Erzeugung und Übertragung von Signalen erzeugten Geräusche zu dämpfen. Dies ist kostenintensiv und benötigt zusätzlichen Bauraum.

Es kann daher ein Bedarf bestehen, ein Fahrpedal mit haptischer Signalgebung bereitzustellen, welches durch eine neuartige Konstruktion der Signalgeberanordnung besonders kompakt baut, einen modularen Aufbau für verschiedene Fahrpedalformen zulässt, das einfach und kostengünstig herstellbar ist, eine geringe Geräuschentwicklung aufweist und bei dem das Signalelement und der Aktuator ausreichend groß dimensioniert werden können, um eine geforderte Signalintensität jederzeit bereitstellen zu können.

### Vorteile der Erfindung

Dieser Bedarf kann durch den Gegenstand der vorliegenden Erfindung gemäß des unabhängigen Vorrichtungsanspruchs gedeckt werden. Vorteilhafte Ausführungsformen der vorliegenden Erfindung sind in den abhängigen Ansprüchen beschrieben.

Im Folgenden werden Merkmale, Einzelheiten und mögliche Vorteile eines Fahrpedals mit haptischer Signalgebung gemäß Ausführungsformen der Erfindung im Detail diskutiert.

Gemäß einem ersten Aspekt der Erfindung wird ein Fahrpedal mit haptischer Signalgebung, insbesondere für ein Kraftfahrzeug, vorgeschlagen. Dabei weist das Fahrpedal eine haptische Signalgeberanordnung auf. Die Signalgeberanordnung weist ein Signalelement und einen Aktuator zur Erzeugung eines Signals auf. Das Signalelement ist mit dem Fahrpedal verbunden. Das Fahrpedal zeichnet sich dadurch aus, dass das Signalelement mittels einer flexiblen Welle mit dem Aktuator verbunden ist, wobei die flexible Welle zur Übertragung des von dem Aktuator erzeugten Signals geeignet ist.

Durch den erfindungsgemäßen Aufbau des Fahrpedals bzw. der Signalgeberanordnung kann gegenüber dem Stand der Technik eine besonders Platz sparende und gewichtsmäßig leichte Konstruktion des Fahrpedals bewirkt werden. Denn durch die Verwendung eines mittels der flexiblen Welle mit dem Aktuator verbundenen Signalelements können in vorteilhafter Weise der Aktuator und das Signalelement beispielsweise voneinander räumlich getrennt angeordnet werden, ohne dass es zu Problemen bei der Übertragung der von dem Aktuator erzeugten Signale kommt. Das Gewicht von Aktuator und Signalelement können somit räumlich getrennt verteilt werden. Dadurch kann die Gewichtsverteilung innerhalb des Fahrpedals optimiert werden. Bei einer Anordnung des Aktuators außerhalb des eigentlichen Fahrpedals kann das Gewicht des eigentlichen, verschwenkbaren Fahrpedals sogar besonders stark gegenüber herkömmlichen Anordnungen reduziert werden. Auch die Geräuschentwicklung kann dadurch besser beherrscht werden, indem z.B. der Aktuator an resonanzarmen Stellen des Fahrpedals verbaut wird oder sogar räumlich vom Fahrpedal entkoppelt verbaut wird.

Die durch die flexible Welle bewirkte mechanische Übertragung der Signale ermöglicht auch vorteilhaft einen besonders robusten Aufbau des Fahrpedals. Denn es wird dadurch möglich, das Signalelement beispielsweise nahe an oder in einer Trittfläche des Fahrpedals anzuordnen, ohne dass eine aufwändige und fehleranfällige elektrische Verbindung bzw. Verkabelung für den Aktuator bis in die Nähe des Signalelements im oder an dem Fahrpedal vorgenommen werden muss.

Vorteilhaft kann weiterhin durch die flexible Welle weitestgehend dieselbe Signalgeberanordnung für verschiedene Formen und Varianten des haptischen Fahrpedals verwendet werden. Denn unterschiedliche Krümmungen des Fahrpedals oder unterschiedliche Längen des Fahrpedals können durch die flexible Welle bzw. eine leicht mögliche Anpassung der Länge der flexiblen Welle in einfacher Art und Weise ausgeglichen werden. Dadurch können erhebliche Kostenvorteile für die Signalgeberanordnung bzw. für das haptische Fahrpedal realisiert werden. Die flexible Welle ermöglicht in gleicher Weise vorteilhaft auch den Einbau von Aktuator bzw. Signalelement an besonders geeigneten Stellen des Fahrpedals, die für verschiedene Varianten von Fahrpedalen an unterschiedlichen Stellen des Fahrpedals liegen können.

Auch wird vorteilhaft bewirkt, dass die Auswahl eines geeigneten Aktuators nicht vom Bauraum am oder innerhalb des Fahrpedals bzw. von konstruktiv begünstigten Stellen im Fahrpedal in der Nähe des Signalelements abhängig ist. Vielmehr kann der Aktuator in Abhängigkeit der gewünschten Signalintensität bzw. des gewünschten Signalmusters frei gewählt werden, da die Übertragung des vom Aktuator erzeugten Signals über die flexible Welle an das Signalelement erfolgt. Es können also z.B. besonders große bzw. schwere Aktuatoren verwendet werden, die in herkömmlichen Fahrpedalen wegen des eingeschränkten Bauraums nicht zum Einsatz kommen können.

Mit anderen Worten ermöglicht die flexible Welle eine Fernübertragung der vom Aktuator erzeugten mechanischen Signale. Dadurch weist das erfindungsgemäße Fahrpedal eine erheblich größere Flexibilität bei der Gestaltung der Form, der Gewichtsverteilung, und bei der Herstellung des Fahrpedals auf. Beispielsweise kann dadurch auch ein modularer Aufbau aus Fahrpedal und Signalgeberanordnung ermöglicht werden. Denn es können beispielsweise dasselbe Signalelement und dieselbe Trittplatte für verschiedene Fahrpedale (Linkslenker, Rechtslenker, Fahrpedale unterschiedlicher Länge, etc.) verwendet werden, wobei lediglich die Zuleitung zur Ansteuerung der Signalgeberanordnung an das jeweilige Fahrpedal angepasst werden muss. Alternativ oder gleichzeitig kann stets derselbe Aktuator verwendet werden, der dann für verschiedene Pedalvarianten an unterschiedlichen, besonders geeigneten Orten verbaut werden kann. Die Verbindung bzw. Wirkverbindung zwischen den beiden Elementen Aktuator und Signalelement wird dann in flexibler Weise durch die flexible Welle bewirkt. Dadurch werden vorteilhaft geringere Kosten in Folge der Verwendung von Gleichteilen und eine schnellere Umsetzung von Kundenwünschen ermöglicht. Auch kann dadurch eine wesentlich größere Flexibilität bei der Konstruktion derartiger Fahrpedale bewirkt werden.

Die flexible Welle kann beispielsweise zur Übertragung von Drehmomenten oder Längsbewegungen geeignet sein. Sie kann dabei zur Übertragung derartiger Bewegungen bzw. (Dreh-)Momente geeignet sein während sie ihre äußere Form bzw. Gestalt beibehält. Sie kann also beispielsweise drehbar, insbesondere mehrfach drehbar sein. Sie kann gleichzeitig oder alternativ derart starr ausgebildet sein, dass sie in der Lage ist, mechanische Impulse entlang einer axialen Erstreckungsrichtung übertragen zu können.

Bei der Übertragung von Längsbewegungen, beispielsweise einem Klopfen, kann unter dem Ausdruck, dass das Signalelement mittels der flexiblen Welle mit dem Aktuator verbunden ist, verstanden werden, dass ein vom Aktuator abgewandtes Ende der flexiblen Welle beispielsweise lose mit dem Signalelement verbunden ist und nur beim Klopfvorgang temporär mit dem Signalelement eine mechanische Berührung eingeht.

Die flexible Welle kann als ein vom Signalelement und vom Aktuator getrenntes, separates Element ausgebildet sein. Die flexible Welle kann an einem Ihrer Enden oder an beiden Enden ein Adapterelement aufweisen, mit welchem die flexible Welle mit dem Aktuator bzw. mit dem Signalelement verbindbar oder an dem Aktuator bzw. Signalelement festlegbar ist.

In der Signalgeberanordnung können das Signalelement und der Aktuator voneinander getrennte, separate Elemente sein. Das Signalelement und der Aktuator können räumlich voneinander getrennt angeordnet sein.

Gemäß einer Ausführungsform der Erfindung weist die flexible Welle ein erstes Ende und ein zweites Ende auf. Das erste Ende weist dabei entlang einer ersten Achse. Das zweite Ende weist dabei entlang einer zweiten Achse. Die flexible Welle ist um wenigstens 15° reversibel verbiegbar, bevorzugt um wenigstens 25°, besonders bevorzugt um wenigstens 45° und ganz besonders bevorzugt um wenigstens 60° reversibel verbiegbar. Idealerweise ist die flexible Welle beliebig reversibel verbiegbar, beispielsweise auch kreisförmig, also um 360° oder mehr. Dabei ist die Verbiegung durch den zwischen der ersten Achse und der zweiten Achse eingeschlossenen Winkel gegeben. Dadurch wird vorteilhaft erreicht, dass mittels der flexiblen Welle auch beispielsweise eine Drehbewegung zwischen dem Aktuator und dem Signalelement übertragen werden kann. Eine derart verbiegbar flexible Welle ermöglicht einen besonders großen Gestaltungsspielraum bei der Anordnung der aus Aktuator, Signalelement und flexible Welle bestehenden Signalgeberanordnung an bzw. in einem Fahrpedal. Vorteilhaft wird dadurch auch die Übertragung des vom Aktuator erzeugten Signals in stark gekrümmten Geometrien eines Fahrpedals oder über mehrfach gegenläufige Krümmungen eines Fahrpedals mit einem einzigen Bauelement, nämlich der flexiblen Welle ermöglicht. Zwischenglieder, wie zum Beispiel Getriebe, Zahnräder oder separate Umlenkelemente sind dadurch vorteilhaft verzichtbar.

Unter dem ersten Ende bzw. dem zweiten Ende der flexiblen Welle kann jeweils ein kurzer Endabschnitt von beispielsweise 1% bis 5% der Gesamtlänge der flexiblen Welle verstanden werden. Die Richtungen der ersten Achse bzw. der zweiten Achse ergeben sich dann jeweils aus der Erstreckungsrichtung bzw. der mittleren Erstreckungsrichtung des jeweiligen Endes. Das erste Ende bzw. das zweite Ende sollte zur Bestimmung der oben definierten Verbiegung jedoch nicht länger als 10mm sein.

Unter dem Ausdruck "reversibel verbiegbar" kann eine elastische Verbiegung wie z.B. bei einem Draht oder einem Seil quer zur Längserstreckungsrichtung verstanden werden.

Eine geringe elastische reversible Verformung einer starren Welle ist hierunter nicht zu verstehen.

Dadurch, dass die flexible Welle als von einer Ummantelung umschlossener Draht gebildet ist, wird vorteilhaft bewirkt, dass die flexible Welle einerseits besonders günstig herstellbar ist. Durch die Ummantelung wird gleichzeitig vorteilhaft der zur Übertragung von Drehmomenten bzw. von Längsbewegungen geeignete Draht vorteilhaft vor Verschmutzungen oder mechanischen Beeinträchtigungen, beispielsweise einem Verhaken mit dem Körper des Fahrpedals, geschützt.

Die Ummantelung kann beispielsweise aus einem spiralförmig um den Draht gewundenen Mantel-Draht, z.B. Stahl oder Aluminium umfassend, gebildet sein oder aus einem Schlauch bzw. Rohr. Ein derartiges Schlauch bzw. ein derartiges Rohr kann beispielsweise als Material Kunststoff umfassen.

Gemäß einer Ausführungsform der Erfindung weist der Draht einen Draht-Durchmesser auf. Der Draht-Durchmesser liegt in einem Bereich zwischen 1mm und 4mm, bevorzugt in einem Bereich zwischen 1,5mm und 2,5mm. Dadurch wird vorteilhaft eine zuverlässige Drehmomentübertragung bzw. Übertragung von Längsbewegungen ermöglicht. Gleichzeitig ist auf diese Weise der Platzbedarf für die flexible Welle besonders gering.

Dadurch, dass die Ummantelung eine Innenwandung aufweist, wobei die Innenwandung eine Beschichtung aufweist, wird vorteilhaft bewirkt, dass der im Innern der Ummantelung verlaufende Draht über Lebensdauer bzw. die Betriebsdauer des Fahrpedals besonders reibungsarm innerhalb der Ummantelung bewegt werden kann. Weiterhin wird dadurch vorteilhaft einer möglichen Korrosion im Innern der Ummantelung vorgebeugt. So kann die Beschichtung beispielsweise durch die Zusammensetzung ihres Materials antikorrosiv wirken. Vorteilhaft kann durch eine geeignete Beschichtung, beispielsweise aus einem Kunststoff, die Geräuschentwicklung bei der Übertragung der haptischen Signale verringert bzw. minimiert werden.

Eine Ausführungsform der Erfindung sieht vor, dass die Beschichtung gegenüber dem Draht der flexiblen Welle eine Gleitreibungszahl µ von weniger als 0,1 aufweist, insbesondere eine Gleitreibungszahl µ von weniger als 0,05, und/oder dass die Beschichtung aus PTFE (Polytetrafluorethylen) bzw. Teflon gebildet ist. Dadurch kann vorteilhaft eine besonders geringe Gleitreibung aber auch eine besonders geringe Haftreibung bewirkt werden. Dies kann vorteilhaft eine weitgehend verlustfreie Übertragung der vom Aktuator erzeugten mechanischen Signale ermöglichen. Auch kann dadurch vorteilhaft ein Verschleiß bzw. Abrieb innerhalb der Ummantelung des Drahtes der flexiblen Welle vorteilhaft gering gehalten werden und auf diese Weise die Lebensdauer der flexiblen Welle erhöht werden. Weiterhin kann dadurch besonders vorteilhaft die Geräuschentwicklung bei der Übertragung der mechanischen Signale, beispielsweise beim Kontakt zwischen Draht und Ummantelung, reduziert werden.

Gemäß der Erfindung weist das Fahrpedal einen Pedalarm und eine mit dem Pedalarm verbundene Trittplatte auf. Der Aktuator ist dabei derart angeordnet, dass er am Pedalarm angeordnet ist oder dass er im Pedalarm angeordnet ist oder dass er in einem Lagerbock des Fahrpedals angeordnet ist. Das Signalelement ist dabei derart angeordnet, dass es an der Trittplatte angeordnet ist oder dass es in der Trittplatte angeordnet ist oder dass es vom Aktuator räumlich getrennt an dem Pedalarm angeordnet ist oder dass es vom Aktuator räumlich getrennt im Pedalarm angeordnet ist oder dass es im Lagerbock des Fahrpedals angeordnet ist, insbesondere vom Aktuator räumlich getrennt.

Die Anordnung des Aktuators am Pedalarm oder im Pedalarm bewirkt vorteilhaft eine besonders einfache Herstellung des Fahrpedals, da das Fahrpedal auf diese Weise fertig montiert an einen Endkunden geliefert werden kann. Eine Anordnung des Aktuators in einem Lagerbock des Fahrpedals bewirkt vorteilhaft, dass der Aktuator nicht zusammen mit dem Fahrpedal bewegt werden muss und dadurch die bewegte Masse des Fahrpedals vorteilhaft reduziert werden kann. Gleichzeitig wird dadurch eine Verkabelung des beweglichen Fahrpedals mit elektrischen Leitungen für den Aktuator verzichtbar. Dadurch kann vorteilhaft das Risiko eines Ausfall der Signalgeberanordnung durch ein beispielsweise durchtrenntes elektrisches Kabel reduziert werden. Darüber hinaus kann durch die freie Wahl des Anordnungsortes des Aktuators die Geräuschentwicklung minimiert werden. Denn auf diese Weise kann der Einbau z.B. an besonders resonanzarmen Stellen des Fahrpedals erfolgen bzw. der Aktuator kann in oder an dem Lagerbock angeordnet werden, wo eine bessere akustische Dämpfung möglich ist und der relativ weit von der Trittplatte entfernt ist.

Durch die Anordnung des Signalelements an der Trittplatte oder in der Trittplatte wird vorteilhaft eine besonders wirkungsvolle Übertragung der haptischen Signale an den Bediener bzw. den Fahrer ermöglicht. Durch eine vom Aktuator räumlich getrennte Anordnung des Signalelements am Pedalarm oder im Pedalarm kann eine besonders ausgeglichene Gewichtsverteilung des Fahrpedals bewirkt werden. Die Anordnung am bzw. im Pedalarm erlaubt darüber hinaus, die bewegte Masse an der Trittplatte mit dem größten Hebelarm gering zu halten, wodurch beispielsweise am Fahrpedal vorgesehene Rückstellfedern geringer dimensioniert werden können, was zusätzlich Bauraum und Kosten einsparen kann. Die Anordnung des Signalelements im Lagerbock erlaubt eine noch weitergehende Reduzierung der bewegten Masse im Pedalarm. Das Signalelement kann dann mit besonders großen konstruktiven Freiheitsgraden ausgelegt werden, da bei einer Anordnung im Lagerboch nicht mehr so stark auf eine Bauraumoptimierung bzw. Gewichtsoptimierung geachtet werden muss. Auf diese Weise kann Signalelement zur Erzeugung eines besonders starken Signals bzw. besonders variabler Signaltypen oder Signalmuster bereit gestellt werden.

Die Trittplatte kann als vom Pedalarm separates Bauelement ausgebildet sein, welches erst bei der Endmontage des Fahrpedals unmittelbar oder mittelbar mit dem Pedalarm verbunden wird. Die Trittplatte kann jedoch auch einstückig mit dem Pedalarm ausgebildet sein bzw. Pedalarm und Trittplatte können als zwei entlang einer Richtung von Pedalarmlager bis zur Trittplatte getrennte Halbelemente bzw. Halbschalen hergestellt sein, die dann bei der Endmontage zum Fahrpedal zusammengesetzt werden.

Eine Weiterbildung der Erfindung sieht vor, dass die flexible Welle in einem Innenraum des Pedalarms angeordnet ist und wenigstens bereichsweise vom Pedalarm umschlossen ist. Besonders bevorzugt ist die flexible Welle vollständig vom Pedalarm umschlossen. Dadurch wird vorteilhaft eine besonders robuste Konstruktion des Fahrpedals bewirkt, bei der die flexible Welle besonders gut gegen äußere mechanische Einwirkungen oder gegen das Eindringen von Medien (Flüssigkeiten oder Gase) oder Schmutz geschützt ist. Weiterhin kann dadurch ein besonders kompakter Aufbau des Fahrpedals bewirkt werden.

Gemäß einem zweiten Aspekt der Erfindung ist ein Kraftfahrzeug mit einem derartigen Fahrpedal mit haptischer Signalgebung vorgesehen. Ein derartiges Kraftfahrzeug kann aufgrund der räumlichen Trennung zwischen Signalelement und Aktuator mittels der flexiblen Welle vorteilhaft besonders kostengünstig hergestellt und besonders komfortabel (z.B. geringe Geräuschentwicklung im Innenraum) betrieben werden.

### Zeichnungen

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

Es zeigen:
Fig. 1 eine schematische Darstellung eines Kraftfahrzeugs mit einem Fahrpedal mit haptischer Signalgebung;
Fig. 2a einen Querschnitt durch ein erfindungsgemäßes Fahrpedal mit haptischer Signalgebung gemäß einer ersten Ausführungsform;
Fig. 2b einen Querschnitt durch ein erfindungsgemäßes Fahrpedal mit haptischer Signalgebung gemäß einer zweiten Ausführungsform;
Fig. 2c eine Aufsicht auf eine Ausführungsform des Signalelements;
Fig. 3a eine Aufsicht auf eine Ausführungsform der flexiblen Welle;
Fig. 3b einen Querschnitt durch eine Ausführungsform der flexiblen Welle.

Alle Figuren sind lediglich schematische Darstellungen erfindungsgemäßer Vorrichtungen bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern bzw. Bezugszeichen versehen.

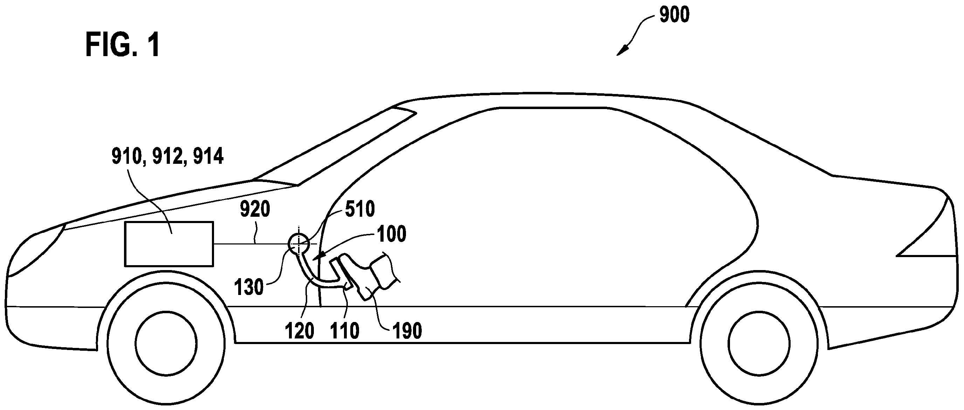

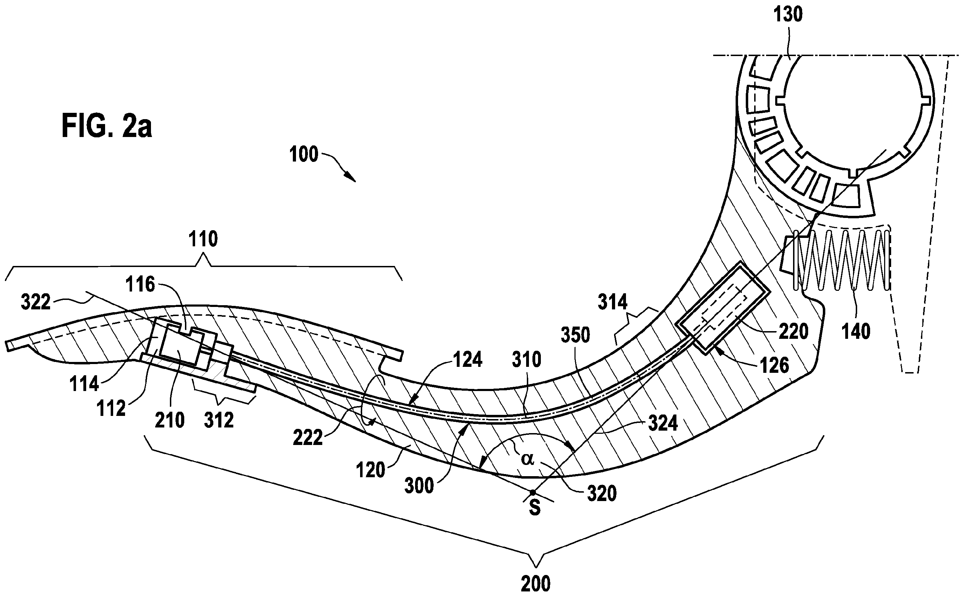

In den Figs. 1 und 2a ist ein Kraftfahrzeug 900 mit einem Fahrpedal 100 mit haptischer Signalgebung dargestellt (Fig. 1) bzw. ein Querschnitt durch eine Ausführungsform des Fahrpedals 100 (Fig. 2a). Das Kraftfahrzeug 900 kann dabei beispielsweise ein Personenkraftwagen (PKW), ein Nutzkraftfahrzeug (NKW) oder ein anderes landgestützte Kraftfahrzeug 900 sein. Es kann sich jedoch auch um ein flugfähiges, schwimmfähiges und/oder tauchfähige Kraftfahrzeug 900 handeln. Das Kraftfahrzeug 900, im dargestellten Ausführungsbeispiel ein PKW, weist einen Antriebsmotor 910 auf, der beispielsweise als ein Verbrennungsmotor 912 oder als ein Elektromotor 914 ausgebildet sein kann. Auch eine Ausbildung als Hybridmotor, also einem Motor, der einen Verbrennungsmotor und einen Elektromotor aufweist oder einen Verbrennungsmotor und einen Hydraulik- bzw. Pneumatikmotor aufweist, ist möglich.

Das Fahrpedal 100 weist eine Trittplatte 110, einen Pedalarm 120 und ein Fahrpedallager 130 auf. Weiterhin weist das Fahrpedal 100 in der Nähe des Fahrpedallagers 130 eine Rückstellfeder 140 auf. Der Antriebsmotor 910 ist mittels einer Signalverbindung 920 mit dem Fahrpedal 100 gekoppelt. Das Fahrpedal 100 kann von einem Fahrer beispielsweise durch eine Kraftausübung mit seinem Fuß 190 um eine am Fahrpedallager 130 angeordnete Pedalachse 510 des Fahrpedals 100 verschwenkt werden. In Abhängigkeit von dem Verschwenkwinkel übermittelt der Fahrer einen Leistungsanforderungs-Wunsch an den Antriebsmotor 910. Der Verschwenkwinkel wird beispielsweise mittels der Signalverbindung 920 an eine am oder im Antriebsmotor 910 angeordnete Einheit übermittelt, mit welcher die Leistung des Antriebsmotors 910 geregelt werden kann, beispielsweise eine Drosselklappe bei einem Verbrennungsmotor (nicht dargestellt). Bei Nachlassen der Kraftausübung auf das Fahrpedal 100 wird das Fahrpedal 100 mittels der Rückstellfeder 140 um die Pedalachse 510 zurück verschwenkt.

Das Fahrpedal 100 kann wenigstens teilweise als Spritzgussteil hergestellt sein, wobei es aus einem Material gebildet sein kann, das beispielsweise Kunststoff und/oder wenigstens ein Metall umfasst.

In Fig. 2a ist ein Querschnitt durch ein derartiges Fahrpedal 100 mit haptischer Signalgebung dargestellt. Dabei ist im Fahrpedal 100 eine Signalgeberanordnung 200 vorgesehen. Die Signalgeberanordnung 200 weist ein Signalelement 210 und einen Aktuator 220 zur Erzeugung eines Signals, insbesondere eines mechanischen Signals, auf. Das Signalelement 210 ist im dargestellten Ausführungsbeispiel im Innern 112 der Trittplatte 110 in einer Aussparung 114 der Trittplatte 110 angeordnet und auf diese Weise mit dem Fahrpedal 100 verbunden. Der Aktuator 220 ist räumlich getrennt vom Signalelement 210 in der Nähe des Fahrpedallagers 130 in einem Innenraum 122 bzw. in einem Innern 122 des Pedalarms 120 angeordnet. Der Aktuator 220 kann beispielsweise in einer Aussparung 126 im Pedalarm 120 vorgesehen sein oder vom Pedalarm 120 umspritzt sein. Die vom Aktuator 220 erzeugten (mechanischen) Signale, beispielsweise in Form einer teilweisen oder vollständigen Drehung oder in Form einer Längsbewegung, werden mittels einer mit dem Aktuator 220 verbundenen, insbesondere mechanisch verbundenen, flexiblen Welle 300 auf das Signalelement 210 übertragen. Die flexible Welle 300 kann bevorzugt ein vom Aktuator 220 separat hergestelltes Bauelement sein.

So kann beispielsweise zunächst die Trittplatte 110 mit dem Signalelement 210 hergestellt werden. Separat davon kann der Pedalarm 120 mit dem darin bzw. daran angeordneten Aktuator 220 hergestellt sein. Schließlich könne die Trittplatte und der Pedalarm zusammengesetzt werden, wobei der Aktuator 220 mittels der flexiblen Welle 300 mit dem räumlich relativ weit entfernten Signalelement 210 derart verbunden wird, dass die vom Aktuator 220 erzeugten Signale von der flexiblen Welle 300 zum Signalelement 210 fernübertragen werden.

Die flexible Welle 300 ist im dargestellten Ausführungsbeispiel in einer im Innenraum 122 bzw. im Innern 122 des Pedalarms 120 verlaufenden kanalförmigen Aussparung 124 angeordnet. Die kanalartige Aussparung 124 folgt dabei der Krümmung des Pedalarms 120 zwischen der Stelle, an welcher das Signalelement 210 angeordnet ist und der Stelle, an welcher der Aktuator 22 angeordnet ist. Die flexible Welle 300 kann dabei in die kanalartige Aussparung 124 eingeschoben werden oder bei einem aus zwei Halbschalen bestehenden Pedalarm 120 vor der Montage des Pedalarms 120 in die kanalartige Aussparung 124 eingelegt werden oder die flexible Welle 300 kann als Einlegeteil vom Pedalarm 120 umspritzt werden. Beispielsweise kann die flexible Welle 300 dadurch vollständig vom Pedalarm 120 umschlossen sein. Dadurch ist die flexible Welle 300 besonders gut gegen das Eindringen von Schmutz oder auch gegen äußere mechanische Einwirkungen geschützt. Somit kann eine Fernübertragung des mechanischen Signals des Aktuators 220 im Wesentlichen unabhängig von der Wegform zwischen Aktuator 220 und Signalelement 210 mit einem einzigen Bauelement, der flexiblen Welle 300, bewirkt werden.

Die flexible Welle 300 weist ein erstes Ende 312 auf, welches benachbart zum Signalelement 210 angeordnet ist und wenigstens zeitweise mit dem Signalelement 210 in mechanischem Kontakt steht. Das erste Ende 312 kann auch dauerhaft mit dem Signalelement 210 verbunden sein. Die flexible Welle 300 weist weiterhin ein zweites Ende 314 auf, welches mit dem Aktuator 220 verbunden ist, bevorzugt dauerhaft verbunden ist. Das erste Ende 312 erstreckt sich entlang einer ersten Achse 322. Das zweite Ende 314 erstreckt sich entlang einer zweiten Achse 324. Dabei schließen die erste Achse 322 und die zweite Achse 324 an ihrem Schnittpunkt S einen Winkel α 320 ein. Die flexible Welle 300 ist derart flexibel ausgebildet, dass es problemlos möglich ist, das erste Ende 312 und das zweite Ende 314 derart zueinander auszurichten, dass der Winkel α 320 mindestens 15° beträgt, bevorzugt wenigstens 25° oder wenigstens 45°, ganz besonders bevorzugt, dass es möglich ist, wenigstens einen Winkel α 320 von 60° zu erreichen. Generell kann die flexible Welle auch derart gewählt werden, dass sie auch kreisförmig, also um wenigstens 360° reversibel elastisch verbiegbar ist. Die mögliche reversible Verbiegung kann z.B. durch die Länge der Welle bestimmt werden. Die Länge der flexiblen Welle kann z.B. bis zu 20cm, bevorzugt bis zu 50cm, besonders bevorzugt bis zu 100cm betragen. Dadurch kann auch bei einer starken Krümmung des Fahrpedals 100 bzw. des Pedalarms 120 zuverlässig ein rotatorisch oder axial wirkendes, vom Aktuator 220 erzeugtes z.B. mechanisches Signal an das Signalelement 210 übertragen werden. Im dargestellten Ausführungsbeispiel erzeugt der Aktuator 220 ein rotatorisches Signal in Form einer Drehung entlang des Pfeils 222, wobei das Signal durch die flexible Welle 300 auf das Signalelement 210 übertragen wird.

Die flexible Welle 300 weist eine äußere Ummantelung 350 bzw. Umhüllung 350 auf, in deren Innern ein Draht 310 verläuft. Der Draht 310 ist dabei das Element, welches das vom Aktuator 220 erzeugte mechanische Signal an das Signalelement 210 übertragen kann, beispielsweise ein Drehmoment oder eine Längsbewegungen.

Die flexible Welle 300 ist im dargestellten Ausführungsbeispiel mittels eines am zweiten Ende 314 angeordneten Adapterstücks (nicht dargestellt) mit dem Aktuator 220 verbunden. Dadurch kann eine vom Aktuator 220 bewirkte Drehbewegung auf die flexible Welle 300 übertragen werden. Auch am ersten Ende 312 kann ein Adapterstück (nicht dargestellt) angeordnet sein, um eine Verbindung der flexiblen Welle 300 mit dem Signalelement 210 zu ermöglichen.

Der Aktuator 220 kann beispielsweise mechanisch, hydraulisch, pneumatisch oder elektromagnetisch betrieben sein. Der Aktuator 220 kann im Sinne eines Stellers bzw. Stellglieds ausgebildet sein. Beispielsweise kann der Aktuator 220 ein Elektromotor, ein Piezoelement, ein pneumatischer Motor oder ein Hubmagnet sein. Generell kann der Aktuator 220 derart ausgebildet sein, dass er Drehbewegungen oder Transversalbewegungen entlang einer oder mehrerer Raumachsen ausführen kann. Er kann z.B. als Torquer, Linearantrieb oder Stepperantrieb ausgebildet sein, ohne auf derartige Ausführungsformen beschränkt zu sein.

Das Signalelement 210 kann beispielsweise als ein Vibrationselement ausgebildet sein. Es kann beispielsweise als ein rotatorisch wirkendes Vibrationselement ausgebildet sein, das bei einer Drehbewegung ein Vibrationssignal durch eine Unwucht erzeugt oder durch ein Anschlagen wenigstens eines Nockens bzw. mehrerer Nocken gegen einen Vorsprung 116, z.B. an der Trittplatte 110. Ein als Vibrationselement ausgebildetes Signalelement 210 kann beispielsweise auch durch eine mittels der flexiblen Welle 300 übertragenen und vom Aktuator 220 erzeugte Längsbewegung zu Vibrationen angeregt werden, beispielsweise durch ein Anschlagen des Signalelements 210 an ein Gegenlager in der Trittplatte 110. Das Signalelement 210 kann das haptische Signal dabei beispielsweise senkrecht zu der Trittplatte 110 des Fahrpedals 100 und/oder waagrecht bzw. parallel zu der Trittplatte 110 erzeugen.

Aktuator 220 und Signalelement 210 können haptische Rückmeldung an den Fahrer zum Beispiel durch ein Anklopfen oder eine Vibration geben. Dabei kann die Intensität der Rückmeldung beispielsweise durch die Frequenz der Vibration oder die Länge eines Vibrationspaketes variiert werden. Es ist dabei möglich, dem Fahrer durch die Vibration oder durch das Anklopfen eine Veränderung eines Betriebszustands des Kraftfahrzeugs 900 mitzuteilen. Hierzu kann das Vibrationssignal bzw. das Anklopfsignal bei Erreichen einer definierten Pedalposition erfolgen, um beispielsweise eine Umschaltung von einem Fahren mit Elektromotor zum Fahren mit Verbrennungsmotor in einem Hybrid-Fahrzeug anzuzeigen.

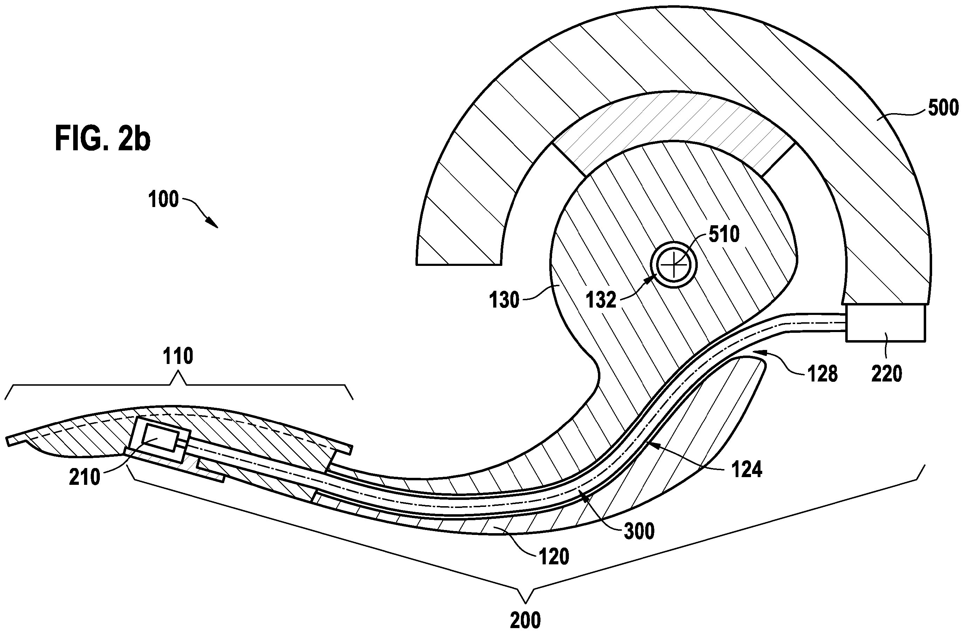

Fig. 2b zeigt eine weitere Ausführungsform des erfindungsgemäßen Fahrpedals 100. In dieser Ausführungsform ist der Aktuator 220 nicht mehr an dem beweglichen Pedalarm 120 angeordnet sondern an einem Lagerbock 500. Das Fahrpedal 100 ist mit dem Fahrpedallager 130 am Lagerbock 500 festgelegt. Dazu ist beispielsweise in einer Aussparung 132 des Fahrpedallagers 130 eine Fahrpedalachse 510 eingesetzt, um die das Fahrpedal 100 verschwenkbar ist. Durch die Anordnung des Aktuators 220 am Lagerbock 500 kann eine besonders geräuscharme Ausbildung des Fahrpedals 100 erreicht werden. Denn die Geräusche des beispielsweise als Elektromotor, Torquer, Pneumatikmotor oder Hubmagneten ausgebildeten Aktuators 220 können am Lagerbock 500 einfacher gedämpft werden, als am beweglichen Pedalarm 120. Die flexible Welle 300 erweist sich als besonders vorteilhafte Verbindung zwischen Aktuator 220 und Signalelement 210, da sie durch ihre Flexibilität die Signalübertragung vom Aktuator 220 zum Signalelement 210 in allen Verschwenkwinkeln des Fahrpedals 100 sicherstellen kann. Die flexible Welle 300 ist im dargestellten Ausführungsbeispiel durch eine Einstecköffnung 128 benachbart zum Fahrpedallager 130 in eine Aussparung 124 im Innenraum 122 bzw. im Innern 122 des Pedalarms 120 eingeschoben. Bei einer derartigen Anordnung des Aktuators am Lagerbock 500 ist auch eine elektrische bzw. pneumatische bzw. hydraulische Anbindung des Aktuators 220 besonders zuverlässig möglich, da die Anbindungselemente (z.B. Pneumatikleitungen, Hydraulikleitungen, elektrische Kabel) keinen Schwenkbewegungen ausgesetzt sind. In einer anderen, hier nicht dargestellten Ausführungsform ist es beispielsweise möglich, die flexible Welle 300 an der Außenseite des Pedalarms 120 anzuordnen.

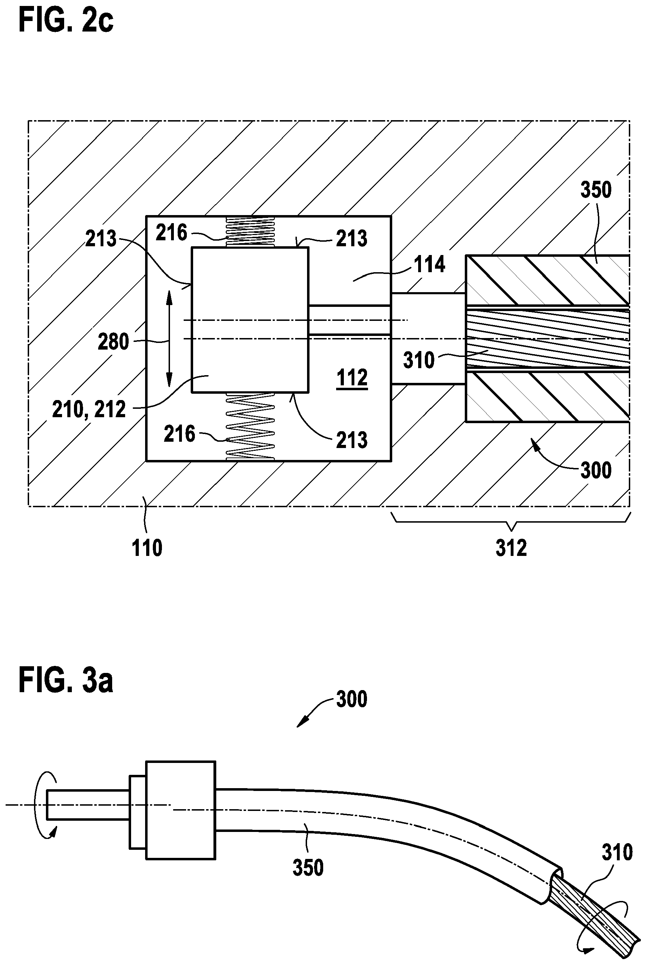

Fig. 2c zeigt eine geschnittene Aufsicht auf ein Ausführungsbeispiel des Signalelements 200. Das Signalelement 200 ist dabei in der Aussparung 114 im Innern 112 der Trittplatte 110 angeordnet. Das Signalelement 210 ist als eine im Wesentlichen rechteckige Platte 212 bzw. Anregungsplatte 212 ausgebildet und umfasst z.B. Metall. Die Platte 212 bzw. die Anregungsplatte 212 bzw. die Metallplatte 212 ist mit dem ersten Ende 312 der flexiblen Welle 300 verbunden. Durch den Draht 310 der flexiblen Welle 300 kann eine translatorischen oder rotatorische Bewegung auf die Platte 212 in Richtung des Pfeils 280 ausgeübt werden, das heißt in der Figur 2c von oben nach unten. Die derart auf die Platte 212 bzw. Anregungsplatte 212 bzw. Metallplatte 212 des Signalelement 210 ausgeübte translatorischen bzw. rotatorische Bewegung, insbesondere Vibrationsbewegung, wird mittels an Stirnseiten 213 der Platte 212 angeordneten Federn 216 auf die Wände der Aussparung 114 und damit auf die Trittplatte 110 übertragen. Auf diese Weise kann ein auf der Trittplatte 110 ruhender Fuß 190 eines Fahrers bzw. eines Bedieners das beispielsweise als Vibration aufgeprägte haptische Signal wahrnehmen. Selbstverständlich ist es auch möglich, das Signalelement 210 anders zu gestalten, beispielsweise durch eine entlang der Längsrichtung des Drahtes 310 auf das Signalelement 210 beaufschlagte Klopfbewegung bzw. Vibrationsbewegung bzw. Längsbewegung. Auch die Verwendung eines rotierenden Elements, das eine ungleichmäßige Gewichtsverteilung zur Erzeugung einer Unwucht aufweist ist denkbar. Ebenfalls denkbar ist eine Erzeugung einer Vibration durch einen an einen Vorsprung 116 (Fig. 2a) der Trittplatte 110 anschlagenden Nocken (nicht dargestellt) des Signalelements 210.

In Fig. 3a ist schematisch die flexible Welle 300 mit ihren Hauptbestandteilen dargestellt. Die flexible Welle 300 umfasst hierbei die kanalartige, außen verlaufende Umhüllung 350 bzw. Ummantelung 350, beispielsweise eine mit Kunststoff umhüllte Drahtröhre, in deren Inneren der Draht 310 als eigentliches Signalübertragungselements verläuft. Die flexible Welle 300 kann somit ähnlich ausgebildet sein wie ein Bowdenzug. Der Draht 310 im Innern der Umhüllung 350 bzw. Ummantelung 350 ist dabei geeignet, sowohl rotatorische Bewegungen durchzuführen und damit Drehmomente zu übertragen als auch Bewegungen entlang seiner Längsrichtung. Derartige rotatorische oder axiale Bewegungen bzw. Kräfte bzw. (Dreh-)Momente sind dabei auch bei einer über eine oder mehrere Biegungen verlaufenden flexiblen Welle 300 zuverlässig übertragbar.

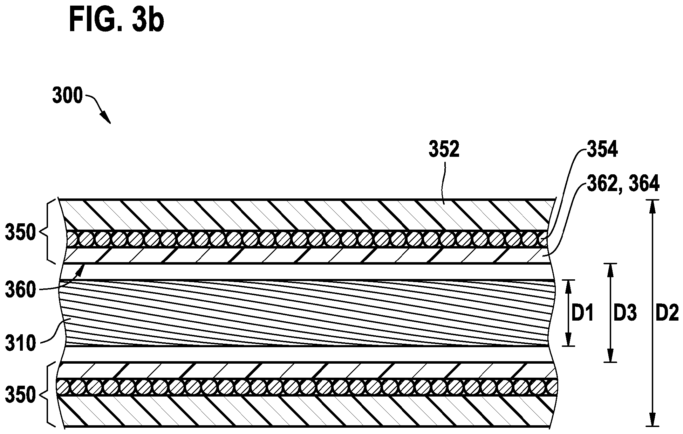

Fig. 3b zeigt einen Querschnitt durch die flexible Welle 300 aus Fig. 3a. Die Ummantelung 350 umfasst dabei von außen nach innen betrachtet eine Schutzhülle 352, die beispielsweise aus einem widerstandsfähigen Kunststoff besteht. Darauf folgt eine druckstabile und zugstabile Mantelhülle 354, die beispielsweise aus einem spiralförmig verlaufenden Metalldraht oder einem stabilen Kunststoff ausgebildet sein kann. Diese Mantelhülle 354 ist an ihrer dem Draht 310 zugewandten Innenwand 360 mit einer Beschichtung 362 versehen. Die Beschichtung 362 ist derart gewählt, dass der Draht 310 besonders einfach und leicht an der Beschichtung 362 entlang gleiten kann. Die Beschichtung 362 weist daher gegenüber dem Draht eine geringe Haftreibungszahl und insbesondere eine geringe Gleitreibungszahl µ von vorzugsweise weniger als 0,1 auf, insbesondere eine Gleitreibungszahl von weniger als 0,05. Die Beschichtung 362 kann aus einem Kunststoff gebildet sein. Bevorzugt ist die Beschichtung 362 aus PTFE bzw. Teflon gebildet. Die Beschichtung 362 kann außerdem derart gewählt sein, dass eine Geräuschentwicklung durch den sich in der Ummantelung 350 bewegenden Draht 310 besonders gut gedämpft ist. Dies kann durch eine Beschichtung 362 aus einem besonders weichen bzw. dämpfenden Material bzw. durch die geeignete Wahl einer Schichtdicke der Beschichtung 362 ermöglicht werden.

Der Draht 310 weist einen Draht-Durchmesser D1 auf. Für eine optimale Übertragung von Drehmomenten und Längsbewegungen und für eine besonders geringe Geräuschentwicklung kann der Draht-Durchmesser D1 in einem Bereich zwischen 1mm (Millimeter) und 4mm liegen, bevorzugt zwischen 1,5mm und 2,5mm. Die flexible Welle 300 weist einen Außendurchmesser D2 auf. Dieser Außendurchmesser D2 kann in einem Bereich zwischen 1,5mm und 8mm liegen. Die flexible Welle 300 weist an ihrer Innenwand 360 einen Innendurchmesser D3 auf, der größer ist als der Draht-Durchmesser D1 des Drahtes 310. Der Innendurchmesser D3 kann dabei zwischen 1,2mm und 7mm liegen. Durch eine geeignete Wahl von Draht-Durchmesser D1, Außendurchmesser D2 und Innendurchmesser D3 ist es möglich, unterschiedlichen Anforderungen an die Flexibilität der flexiblen Welle 300, an die zu übertragenden (Dreh-)Momente bzw. Längsbewegungen und an die Geräuschentwicklung bei der Übertragung von haptischen Signalen durch die flexible Welle 300 gerecht zu werden. So kann beispielsweise mit zunehmendem Abstand zwischen Aktuator 220 und Signalelement 210 sowie mit zunehmendem zu übertragenden Kräften bzw. (Dreh-)Momenten der Draht-Durchmesser D1 steigen. Für stark gebogene Wegverläufe oder mehrfach gebogene Wegverläufe zwischen Aktuator 220 und Signalelement 210 kann ein relativ zum Draht-Durchmesser D1 besonders großer Innendurchmesser D3 sowie gleichzeitig ein möglichst geringer Außendurchmesser D2 vorteilhaft sein.

Das vorgeschlagene Fahrpedal 100 mit haptischer Signalgebung kann generell in Kraftfahrzeugen jedweder Art eingesetzt werden, beispielsweise in PKWs, NKWs, flugfähigen, schwimmfähigen und/oder tauchfähige Kraftfahrzeugen, die mit einem Antriebsmotor betrieben werden.

## Patentansprüche

1. Fahrpedal mit haptischer Signalgebung, insbesondere für ein Kraftfahrzeug, wobei das Fahrpedal (100) eine haptische Signalgeberanordnung (200) aufweist, wobei die Signalgeberanordnung (200) ein Signalelement (210) und einen Aktuator (220) zur Erzeugung eines Signals aufweist,
wobei das Signalelement (210) mit dem Fahrpedal (100) verbunden ist,
**dadurch gekennzeichnet, dass**
das Signalelement (210) mittels einer flexiblen Welle (300) mit dem Aktuator (220) verbunden ist.
wobei die flexible Welle (300) zur Übertragung des von dem Aktuator (220) erzeugten Signals geeignet ist,
wobei die flexible Welle (300) in einem Innenraum (122) eines Pedalarms (120) angeordnet ist und wenigstens bereichsweise vom Pedalarm (120) umschlossen ist, insbesondere dass die flexible Welle (300) vollständig vom Pedalarm (120) umschlossen ist.

2. Fahrpedal nach Anspruch 1, **dadurch gekennzeichnet, dass**
die flexible Welle (300) ein erstes Ende (312) und ein zweites Ende (314) aufweist,
wobei das erste Ende (312) entlang einer ersten Achse (322) weist,
wobei das zweite Ende (314) entlang einer zweiten Achse (324) weist,
wobei die flexible Welle (300) um wenigstens 15° reversibel verbiegbar ist, insbesondere um wenigstens 25° reversibel verbiegbar ist,
wobei die Verbiegung durch den zwischen der ersten Achse (322) und der zweiten Achse (324) eingeschlossenen Winkel (320) gegeben ist.

3. Fahrpedal nach Anspruch 1 oder 2, **dadurch gekennzeichnet, dass**
die flexible Welle (300) als von einer Ummantelung (350) umschlossener Draht (310) gebildet ist.

4. Fahrpedal nach Anspruch 3, **dadurch gekennzeichnet, dass**
der Draht (310) einen Draht-Durchmesser (D1) aufweist,
wobei der Draht-Durchmesser (D1) in einem Bereich zwischen 1mm und 4mm liegt, insbesondere zwischen 1,5mm und 2,5mm.

5. Fahrpedal nach Anspruch 3 oder 4, **dadurch gekennzeichnet, dass**
die Ummantelung (350) eine Innenwandung (360) aufweist, wobei die Innenwandung (360) eine Beschichtung (362) aufweist.

6. Fahrpedal nach Anspruch 5, **dadurch gekennzeichnet dass**
die Beschichtung (362) gegenüber dem Draht (310) der flexiblen Welle (300) eine Gleitreibungszahl µ von weniger als 0,1 aufweist, insbesondere weniger als 0,05 aufweist, und/oder dass die Beschichtung (362) aus PTFE (364) gebildet ist.

7. Fahrpedal nach einem der vorhergehenden Ansprüche, **dadurch gekennzeichnet, dass**
das Fahrpedal (100) den Pedalarm (120) und eine mit dem Pedalarm (120) verbundene Trittplatte (110) aufweist,
wobei der Aktuator (220) derart angeordnet ist,
dass er am Pedalarm (120) angeordnet ist,
oder dass er im Pedalarm (120) angeordnet ist,
oder dass er in einem Lagerbock (500) des Fahrpedals (100) angeordnet ist. wobei das Signalelement (210) derart angeordnet ist,
dass es an der Trittplatte (110) angeordnet ist,
oder dass es in der Trittplatte (110) angeordnet ist,
oder dass es vom Aktuator (220) räumlich getrennt an dem Pedalarm (120) angeordnet ist,
oder dass es vom Aktuator (220) räumlich getrennt im Pedalarm (120) angeordnet ist,
oder dass es im Lagerbock (500) des Fahrpedals (100) angeordnet ist.

8. Kraftfahrzeug mit einem Fahrpedal (100) mit haptischer Signalgebung gemäß einem der vorhergehenden Ansprüche.

## Claims

1. Accelerator pedal with haptic signalling, in particular for a motor vehicle, wherein the accelerator pedal (100) has a haptic signalling arrangement (200), wherein the signalling arrangement (200) has a signal element (210) and an actuator (220) for generating a signal,
wherein the signal element (210) is connected to the accelerator pedal (100),
**characterized in that**
the signal element (210) is connected to the actuator (220) by means of a flexible shaft (300), wherein the flexible shaft (300) is suitable for transmitting the signal which is generated by the actuator (220),
wherein the flexible shaft (300) is arranged in an interior space (122) of a pedal arm (120) and is enclosed at least partially by the pedal arm (120), in particular **in that** the flexible shaft (300) is completely enclosed by the pedal arm (120) .

2. Accelerator pedal according to Claim 1, **characterized in that** the flexible shaft (300) has a first end (312) and a second end (314),
wherein the first end (312) points along a first axis (322),
wherein the second end (314) points along a second axis (324),
wherein the flexible shaft (300) can be bent reversibly by at least 15°, in particular can be bent reversibly by at least 25°,
wherein the bending is provided by means of the angle (320) which is enclosed between the first axis (322) and the second axis (324).

3. Accelerator pedal according to Claim 1 or 2, **characterized in that** the flexible shaft (300) is formed as a wire (310) which is enclosed by a sheath (350).

4. Accelerator pedal according to Claim 3, **characterized in that** the wire (310) has a wire diameter (D1),
wherein the wire diameter (D1) is in a range between 1 mm and 4 mm, in particular between 1.5 mm and 2.5 mm.

5. Accelerator pedal according to Claim 3 or 4, **characterized in that** the sheath (350) has an internal wall (360), wherein the internal wall (360) has a coating (362).

6. Accelerator pedal according to Claim 5, **characterized in that** the coating (362) compared with the wire (310) of the flexible shaft (300) has a coefficient of sliding friction µ of less than 0.1, in particular of less than 0.05, and/or in that the coating (362) is formed from PTFE (364).

7. Accelerator pedal according to one of the preceding claims, **characterized in that**
the accelerator pedal (100) has the pedal arm (120) and a footplate (110) which is connected to the pedal arm (120),
wherein the actuator (220) is arranged in such a way that it is arranged on the pedal arm (120),
or **in that** it is arranged in the pedal arm (120), or **in that** it is arranged in a bearing block (500) of the accelerator pedal (100),
wherein the signal element (210) is arranged in such a way that it is arranged on the footplate (110),
or **in that** it is arranged in the footplate (110), or **in that** it is arranged spatially separated from the actuator (220) on the pedal arm (120),
or **in that** it is arranged spatially separated from the actuator (220) in the pedal arm (120),
or **in that** it is arranged in the bearing block (500) of the accelerator pedal (100).

8. Motor vehicle having an accelerator pedal (100) with haptic signalling according to one of the preceding claims.

## Revendications

1. Pédale d'accélérateur avec transmission de signal haptique, notamment pour un véhicule automobile, la pédale d'accélérateur (100) possédant un arrangement de transmetteurs de signaux haptiques (200), l'arrangement de transmetteurs de signaux (200) possédant un élément de signalisation (210) et un actionneur (220) destiné à générer un signal,
l'élément de signalisation (210) étant relié à la pédale d'accélérateur (100),
**caractérisée en ce que**
l'élément de signalisation (210) est relié à l'actionneur (220) au moyen d'un arbre flexible (300), l'arbre flexible (300) étant conçu pour la transmission du signal généré par l'actionneur (220),
l'arbre flexible (300) étant disposé dans un espace intérieur (122) d'un bras de pédale (120) et étant entouré par le bras de pédale (120) au moins dans certaines zones, notamment que l'arbre flexible (300) est entièrement entouré par le bras de pédale (120).

2. Pédale d'accélérateur selon la revendication 1, **caractérisée en ce que** l'arbre flexible (300) possède une première extrémité (312) et une deuxième extrémité (314),
la première extrémité (312) étant orientée le long d'un premier axe (322),
la deuxième extrémité (314) étant orientée le long d'un deuxième axe (324),
l'arbre flexible (300) pouvant être cintré de manière réversible sur au moins 15°, notamment pouvant être cintré de manière réversible sur au moins 25°,
le cintrage étant donné par l'angle (320) inclus entre le premier axe (322) et le deuxième axe (324).

3. Pédale d'accélérateur selon la revendication 1 ou 2, **caractérisée en ce que** l'arbre flexible (300) est réalisé sous la forme d'un fil métallique (310) entouré par une gaine (350).

4. Pédale d'accélérateur selon la revendication 3, **caractérisée en ce que** le fil métallique (310) possède un diamètre de fil métallique (D1),
le diamètre de fil métallique (D1) étant compris dans la plage entre 1 mm et 4 mm, notamment entre 1,5 mm et 2,5 mm.

5. Pédale d'accélérateur selon la revendication 3 ou 4, **caractérisée en ce que** la gaine (350) possède une paroi intérieure (360), la paroi intérieure (360) possédant un revêtement (362).

6. Pédale d'accélérateur selon la revendication 5, **caractérisée en ce que** le revêtement (362) possède un coefficient de friction de glissement µ inférieur à 0,1 par rapport au fil métallique (310) de l'arbre flexible (300), notamment inférieur à 0,05, et/ou **en ce que** le revêtement (362) est constitué de PTFE (364).

7. Pédale d'accélérateur selon l'une des revendications précédentes, **caractérisée en ce que**
la pédale d'accélérateur (100) possède le bras de pédale (120) et un patin (110) relié au bras de pédale (120),
l'actionneur (220) étant disposé de telle sorte qu'il.est disposé sur le bras de pédale (120),
ou qu'il est disposé dans le bras de pédale (120),
ou qu'il est disposé dans un support de palier (500) de la pédale d'accélérateur (100),
l'élément de signalisation (210) étant disposé de telle sorte
qu'il est disposé sur le patin (110),
ou qu'il est disposé dans le patin (110),
ou qu'il est disposé sur le bras de pédale (120) en étant séparé dans l'espace de l'actionneur (220),
ou qu'il est disposé dans le bras de pédale (120) en étant séparé dans l'espace de l'actionneur (220),
ou qu'il est disposé dans le support de palier (500) de la pédale d'accélérateur (100).

8. Véhicule automobile équipé d'une pédale d'accélérateur (100) avec transmission de signal haptique selon l'une des revendications précédentes.
